# DEMANDE DE BREVET EUROPEEN

(11) **EP 4 678 517 A1**
(43) Date de publication de la demande: **14.01.2026**
(21) Numéro de dépôt: 25188974.7
(22) Date de dépôt: 11.07.2025
(51) Int. Cl.: B62D 33/037, E05B 83/10

(54) **SYSTÈME PÊNE ET GÂCHE ET DISPOSITIF D'OUVERTURE ET DE FERMETURE COMPORTANT UN TEL SYSTÈME**

(30) Priorité: 12.07.2024 FR 2407636
(71) Demandeur: Thiriet, 08000 Warcq (FR)
(72) Inventeur: BENARD, Emeric, 08000 WARCQ (FR); BOSSEAUX, Ludovic, 08000 WARCQ (FR); GARCIA-NOTARIO, Romain, 08000 WARCQ (FR); RIBEIRO, Joël, 08000 WARCQ (FR); THIRIET, Philippe, 08000 WARCQ (FR)
(74) Mandataire: Plasseraud IP

(57) **Abrégé**

Système pêne et gâche pour dispositif d'ouverture et de fermeture d'une porte de caisse de camion ou de semi-remorque, le système comprenant un pêne (P) et une gâche (G), ladite porte étant configurée pour passer d'une position d'ouverture jusqu'à une position de fermeture, par articulation de la porte, ledit dispositif d'ouverture et de fermeture (configuré pour passer d'un état de verrouillage pour lequel le pêne vient en position d'engagement et de verrouillage dans la gâche (G) jusqu'à un état de déverrouillage (EDV), par pivotement de la barre de commande, autorisant un échappement entre le pêne et la gâche d'une distance d'extraction (DE) supérieure à 75mm.

## Description

La présente divulgation est relative à un système pêne et gâche pour un dispositif de fermeture et d'ouverture d'une porte de camion ou semi-remorque, ainsi qu'un dispositif de fermeture et d'ouverture comportant un tel système.

Le système de pêne et de gâche, ainsi que le dispositif de fermeture et d'ouverture trouvent une application particulière pour assurer le verrouillage de portes équipées de joints élastomères, en particulier de grande dimension, assurant une étanchéité entre le dormant et la ou les portes, et tels qu'ils peuvent être rencontrés dans les caisses de camions ou semi-remorques frigorifiques

### Domaine technique

La présente divulgation relève du domaine des dispositifs de fermeture et d'ouverture pour camion ou semi-remorque, communément appelé « crémone » par la personne du métier.

### Technique antérieure

Il est connu, en particulier du document FR2906828 de la présente Demanderesse un dispositif d'ouverture et de fermeture d'une porte de camion ou de semi-remorque.

Les portes de camion, ou semi-remorques comprennent généralement, deux portes battantes, droite et gauche, respectivement articulées par des charnières à deux montants du dormant, et suivant deux axes de pivotement sensiblement verticaux.

Chaque porte comprend un dispositif d'ouverture et de fermeture qui comprend une barre de commande, articulée en pivot, sur le côté extérieur de la porte, par des paliers, ainsi qu'un organe de manœuvre, typiquement comportant levier de manœuvre solidaire en rotation à la barre de commande, et qui permet d'entrainer la barre de commande en rotation, suivant une course angulaire de l'ordre du quart de tour, voire plus, pour déverrouiller ou au contraire verrouiller la porte. L'organe de manœuvre est encore configuré pour assurer un verrouillage, par blocage de l'organe de manœuvre en rotation, dans une position de fermeture du dispositif.

Le dispositif d'ouverture et de fermeture comporte encore des systèmes pêne et gâche, formant des verrous supérieur et inférieur à la porte, typiquement, pour chaque porte :
- un verrou supérieur comportant une gâche supérieure, solidaire d'une traverse supérieure du dormant, la gâche configurée pour engager dans un état de verrouillage avec un pêne, supérieur solidaire de l'extrémité supérieure de la barre de commande,
- un verrou inférieur comportant une gâche inférieure, solidaire d'une traverse inférieure, la gâche configurée pour engager dans un état de verrouillage avec un pêne inférieur de l'extrémité inférieure de la barre de commande.

Partant de l'état de déverrouillage pour lequel les pênes inférieur et supérieur sont engagés et verrouillés dans les gâches respectives, un opérateur ouvre la porte en saisissant ledit organe de manœuvre, en déverrouillant sa rotation, puis en provoquant la rotation de la barre et de sorte à extraire simultanément les pênes des gâches.

Les documents US3549185 A, US4235463 A, EP0270839 A1 représentent diverses réalisations de verrous comportant un système pêne et gâche comprenant le fonctionnement précité.

Selon les constatations de la Demanderesse, et en particulier pour des portes de semi-remorques frigorifiques, même dans l'état de déverrouillage pour lequel les pênes sont extraits des gâches, l'ouverture par l'opérateur nécessite encore de tirer sur la porte afin de faire échapper les joints d'étanchéité entre le dormant et l'ouvrant de porte.

Cette opération de traction peut être fastidieuse pour l'opérateur, en particulier lorsqu'en présence de joints élastomère de large dimension en épaisseur, au-dessus de 70mm suivant l'épaisseur, tel que par exemple 80 mm voire 90 mm, qui offre de bonnes performances d'étanchéité, mais génèrent des frottements importants entre l'ouvrant et le dormant lors de l'ouverture de la porte.

En présence de tels joints de large dimension, une fois les pênes et gâches déverrouillés, l'opérateur doit encore tirer fortement sur la porte pour que les chants de la porte soient dégagés des frottements, et échappent les joints.

### Résumé

La présente divulgation vient améliorer la situation.

Il est proposé un système pêne et gâche pour dispositif d'ouverture et de fermeture d'une porte de caisse de camion ou de semi-remorque, le système comprenant un pêne et une gâche , ladite porte étant configurée pour passer d'une position d'ouverture jusqu'à une position de fermeture, par articulation de la porte, typiquement selon un pivot vertical à un montant d'un dormant, la gâche destinée à être fixée au dormant de la porte, typiquement à une traverse supérieure ou à une traverse inférieure du dormant de la porte, et le pêne destiné à être monté solidaire à une extrémité d'une barre de commande du dispositif d'ouverture et de fermeture, ladite barre de commande étant tubulaire, montée pivotante sur la porte, par l'intermédiaire de paliers, ledit dispositif d'ouverture et de fermeture configuré pour passer d'un état de verrouillage pour lequel le pêne vient en position d'engagement et de verrouillage dans la gâche jusqu'à un état de déverrouillage , par pivotement de la barre de commande, autorisant un échappement entre le pêne et la gâche
- le pêne comprenant :
   - une partie mâle configurée pour être emboitée dans un creux de la barre de commande , à une embouchure de la barre de commande, ladite partie mâle s'étendant suivant un axe A, destiné à être coaxial à la barre de commande,
   - une partie d'engagement configurée pour engager et se verrouiller en position dans ladite gâche s'étendant en longueur suivant un axe B, transversal à l'axe A, depuis une extrémité proximale solidaire de la partie mâle au niveau de laquelle est prévue au moins une cavité de verrouillage et jusqu'à une extrémité distale comportant au moins portion d'accrochage,
   - la gâche comprenant un corps s'étendant en longueur comportant, d'un premier côté une surface de fixation , plane, configurée pour venir en appui sur le dormant de la porte, et comportant d'un deuxième côté en relief, décalés sur la longueur de la gâche :
      - un organe d'accrochage, configuré pour être accroché par l'extrémité distale de la partie d'engagement du pêne,
      - au moins une saillie de verrouillage configurée pour pénétrer ladite au moins une cavité de verrouillage.

Ledit pêne est configuré lors d'un pivotement au verrouillage autour de l'axe A, à partir de l'état de déverrouillage pour successivement assurer un accrochage de l'organe d'accroche par ladite au moins une portion d'accroche puis une traction sur la gâche jusqu'à ladite au moins une saillie de verrouillage vienne engager dans ladite au moins une cavité dans ledit état de verrouillage. Dans l'état de verrouillage, la partie d'engagement du pêne s'étend suivant l'axe B, sensiblement parallèlement à l'axe longitudinal de la gâche, ladite au moins une partie d'accrochage du pêne accrochée audit organe d'accrochage afin d'assurer un verrouillage du pêne par rapport à la gâche suivant l'axe B, ladite au moins une saillie de verrouillage engageant dans ladite au moins une cavité du pêne de sorte à assurer un verrouillage du pêne par rapport à la gâche suivant l'axe A du pêne.

Le système pêne et gâche est configuré lors d'un pivotement au déverrouillage du pêne autour de l'axe A depuis l'état de verrouillage jusqu'audit état de déverrouillage pour provoquer successivement, au cours du pivotement au déverrouillage du pêne autour de l'axe A:
- un décrochage entre ladite au moins une portion d'accrochage de l'extrémité distale du pêne et de l'organe d'accrochage de la gâche,
- une mise en contact en l'extrémité distale du pêne et au moins une surface de guidage de la gâche s'étendant sur le corps de la gâche, en longueur sur le corps gâche, depuis une base de l'organe d'accroche, et en direction de ladite au moins une saillie de verrouillage,
- une poussée du pêne sur la gâche par l'extrémité distale du pêne en glissement sur la surface de guidage, et jusqu'à ce que l'axe B de la portion d'engagement du pêne soit sensiblement perpendiculaire à la surface de fixation dans une position d'extraction du pêne.

Selon la présente divulgation la distance d'extraction séparant l'axe A et la surface de fixation de la gâche dans ladite position d'extraction, en fin de poussée, est supérieure ou égale à 75mm, de préférence supérieure à 80 mm, par exemple compris entre 80mm et 110mm, telle que 87 mm ou 97mm.

Les caractéristiques exposées dans les paragraphes suivants peuvent, optionnellement, être mises en œuvre, indépendamment les unes des autres ou en combinaison les unes avec les autres :

- Dans l'état de verrouillage pour lequel le pêne est en engagement dans la gâche, la distance de verrouillage séparant l'axe A et la surface de fixation peut être comprise entre 20mm et 32mm, telle que 26.5mm.

- Le système pêne et gâche peut être configuré, lors du pivotement au déverrouillage de la barre de commande, de l'état de verrouillage jusqu'à l'état de déverrouillage dans la position d'extraction du pêne, pour écarter l'axe A du pêne par rapport à la surface de fixation d'une course projetée suivant une direction perpendiculaire à la surface de fixation supérieure à 50 mm, de préférence supérieurs à 55 mm, telle que 60,5mm, voire supérieure à 65mm ou 70,5mm.

- La surface de guidage le long de laquelle glisse l'extrémité distale de la portion d'engagement du pêne lors du pivotement eu déverrouillage forme une rampe par rapport à la surface de fixation, croissante suivant le sens de l'organe d'accrochage vers ladite au moins saillie, et dans lequel l'extrémité distale est configurée pour cheminer à la montée le long de la rampe lors du pivotement au déverrouillage.

- Un sommet de la rampe de la surface de guidage au niveau de laquelle l'extrémité distale est susceptible d'appuyer à ladite position d'extraction, peut-être à une distance de la surface de fixation (comprise entre15 mm et 23 mm telle que 19mm, et dans lequel la hauteur de la rampe suivant la direction perpendiculaire à la surface de fixation (43) est comprise entre 6.mm et 15 mm.-Le sommet de la rampe peut former une saillie mâle reçue dans une partie femelle du pêne dans l'état de verrouillage.

- La distance séparant l'axe A de l'extrémité distale de la partie engagement du pêne est comprise entre 54.5 mm et 90 mm, telle que 68 mm ou encore 78 mm.

- Ladite extrémité distale peut comprendre une fourche, et ledit au moins une portion d'accroche peut comprendre une première portion d'accroche et une deuxième portion d'accroche, espacées l'une de l'autre suivant l'axe A, respectivement agencées respectivement aux extrémités terminales d'une première branche et d'un deuxième branche de la fourche,
et dans lequel ledit organe d'accroche est une partie en T comprenant une aile verticale de la partie en T, s'étendant suivant un direction perpendiculaire à un plan de surface de fixation et une aile horizontal de la partie en T, ladite aile verticale en saillie du corps de la gâche et ladite aile horizontale orientée suivant une direction transversale à l'axe longitudinale de la gâche
et dans lequel lors d'un passage de l'état de déverrouillage à l'état de verrouillage, la première branche et la deuxième branche de la fourche sont configurées pour venir de part et d'autre de l'aile verticale de la partie en T, la première portion d'accroche et le deuxième portion d'accroche configurées pour accrocher une bordure intérieure de l'aile horizontale de la partie en T, de part et d'autre de l'aile verticale de la partie en T.

- La surface de guidage peut comprendre une première surface de guidage, et une deuxième surface de guidage s'étendant en parallèle suivant la longueur du corps de la gâche, de part et d'autre de ladite aile verticale de la partie en T, et dans lequel
- la première surface de guidage est configurée pour coopérer au glissement avec l'extrémité terminale de la première branche de la fourche, et
- la deuxième surface de guidage est configurée pour coopérer au glissement avec l'extrémité terminale de la deuxième branche de la fourche.

- Ladite au moins une cavité peut comprendre une cavité traversante de contour fermée, agencée intermédiaire sur la portion d'engagement, entre l'axe A et ladite au moins une portion d'accroche, et dans lequel la gâche comprend une saillie (configurée pour engager la cavité traversante dans l'état de verrouillage, ladite saillie présentant :
- une première pente de guidage, configurée pour engager avec un premier bord latéral de la cavité traversante pour repousser le pêne par rapport à la gâche dans un premier sens suivant la direction de l'axe A,
- une deuxième pente de guidage, diamétralement opposé par rapport à l'axe longitudinal de la gâche, configurée pour engager avec un deuxième bord latéral de la cavité traversante pour repousser le pêne par rapport à la gâche dans un premier sens suivant la direction de l'axe A.

- Le système peut comprendre une nervure de renfort s'étendant suivant la direction de l'axe longitudinal de la gâche entre la base de l'aile verticale du T et une base de ladite saillie et dans lequel la portion d'engagement du pêne comprend une rainure, s'étendant suivant l'axe B de la portion d'engagement 3, logeant la nervure de renfort dans l'état de verrouillage.

- Ladite au moins une cavité peut comprendre une cavité d'extrémité de profil en V, débouchant à l'extrémité proximale, du côté de l'axe A opposé à l'extrémité distale de la portion d'engagement du pêne et dans lequel la gâche comprend une saillie triangulaire comprenant deux surfaces de butée en V consistant en une première surface de butée et une deuxième surface de butée configurées pour coopérer avec les deux parois de la cavité en V.

Selon un mode de réalisation, ledit système peut comprendre :
- ladite cavité traversante agencée intermédiaire sur la portion d'engagement, entre l'axe A et ladite au moins une portion d'accroche formant une première cavité , configurée pour engager avec la saillie qui est une première saillie
- ladite cavité d'extrémité débouchant à l'extrémité proximale, du côté de l'axe A opposé à l'extrémité distale de la portion d'engagement du pêne formant une deuxième cavité configurée pour engager avec la saillie triangulaire qui est une deuxième saillie
et dans lequel dans l'état de verrouillage, le pêne est verrouillé par rapport à la gâche, de par la première saillie dans la première cavité et par la deuxième saillie dans la deuxième cavité, de part et d'autre de l'axe A.

La première saillie et la deuxième saillie sont configurées, lors d'un pivotement au verrouillage du pêne autour de l'axe A, de l'état de déverrouillage jusqu'à l'état de verrouillage, pour assurer :
- un premier centrage du pêne par rapport à la gâche suivant la direction de l'axe A par un travail de la première pente de guidage sur le premier bord latéral de la cavité traversante et/ou de la deuxième pente de guidage sur le deuxième bord latéral de la cavité traversante, puis successivement
- un deuxième centrage du pêne par rapport à la gâche suivant la direction de l'axe A par un travail d'une première des deux parois en V de la saillie triangulaire sur l'une des deux parois en V de la deuxième cavité et/ou le travail d'une deuxième des deux parois en V de la saillie triangulaire sur l'autre des deux parois en V de la deuxième cavité.

Selon un mode de réalisation, ladite extrémité proximale de portion d'engagement peut comporter une portion cylindrique coaxiale à l'axe A, et dans lequel dans l'état de verrouillage, la gâche comprend une cavité semi-cylindrique, recevant partiellement la portion cylindrique, en particulier la cavité semi-cylindrique agencée entre la première saillie et la deuxième saillie.

Selon un mode de réalisation, la rampe de la surface de guidage, croissante suivant le sens de l'organe d'accrochage, par rapport à la surface de fixation, vers ladite au moins saillie s'étend jusqu' à un sommet formé par un plateau, sensiblement parallèle à la surface de fixation (de ladite gâche, plateau sur lequel butée l'extrémité distale de la partie d'engagement dans ledit état de déverrouillage. Le plateau peut s'étendre suivant la longueur de la gâche entre la première saillie (41) et la deuxième saillie.

Selon un mode de réalisation, ladite extrémité proximale de ladite partie d'engagement du pêne peut comprendre une partie effilée d'épaisseur Ep2, inférieure à l'épaisseur Ep1 d'une portion médiane de la partie d'engagement entre ladite extrémité distale et ladite extrémité proximale, la partie effilée configuré pour venir en vis-à-vis du plateau dans l'état de verrouillage.

Selon un mode de réalisation, le pêne et la gâche sont des pièces métalliques forgées.

Selon un mode de réalisation :
- le pêne comporte un plan de symétrie passant par l'axe A de partie mâle, et par l'axe B, longitudinal de la partie d'engagement,
- la gâche comporte un plan de symétrie passant par l'axe longitudinal de ladite gâche.

Selon un deuxième aspect, le dispositif d'ouverture et de fermeture de porte de camion ou semi-remorque, comprenant au moins une porte articulée en pivot à un montant d'un dormant, le dispositif comprenant une barre de commande articulée en pivot par des paliers à la porte, ainsi qu'au moins un système pêne et gage selon la présente divulgation dont le pêne est fixé à une extrémité de la barre de commande, et la gâche fixée par la surface de fixation à une traverse, supérieure ou inférieure du dormant de la porte
et dans lequel le système pêne et gâche est configuré lors d'un pivotement au déverrouillage du pêne autour de l'axe A depuis l'état de verrouillage jusqu'audit état de déverrouillage pour provoquer successivement, au cours du pivotement au déverrouillage du pêne autour de l'axe A:
- un décrochage entre ladite au moins une portion d'accrochage de l'extrémité distale du pêne et de l'organe d'accrochage de la gâche,
- une mise en contact entre l'extrémité distale du pêne et au moins une surface de guidage de la gâche s'étendant sur le corps de la gâche, en longueur sur le corps gâche, depuis une base de l'organe d'accroche, et en direction de ladite au moins une saillie de verrouillage,
- une poussée du pêne sur la gâche par l'extrémité distale du pêne en glissement sur la surface de guidage, et jusqu'à ce que l'axe B de la portion d'engagement du pêne soit sensiblement perpendiculaire à la surface de fixation dans une position d'extraction, et dans lequel la distance d'extraction séparant l'axe A et la surface de fixation de la gâche dans ladite position d'extraction, en fin de poussée, est supérieure ou également à 75mm, de préférence supérieure à 80 mm par exemple compris entre 80mm et 110mm telle que 87mm ou 97mm, et de préférence selon un déplacement de l'axe A d'une course projetée suivant une direction perpendiculaire à la surface de fixation supérieure à 50 mm de préférence supérieure à 55 mm, telle que 60,5mm, voire supérieure à 65mm telle que 70,5mm.La présente divulgation concerne encore l'utilisation du dispositif d'ouverture et de fermeture selon la présente divulgation pour une porte de semi-remorque frigorifique ou de camion frigorifique comprenant des joints d'étanchéité entre le dormant et la porte, ladite position d'extraction du pêne configurée pour assurer un déplacement de la porte à l'ouverture au niveau de l'axe A, autorisant un échappement des joints d'étanchéité.

### Brève description des dessins

D'autres caractéristiques, détails et avantages apparaîtront à la lecture de la description détaillée ci-après, et à l'analyse des dessins annexés, sur lesquels :
**Fig. 1**

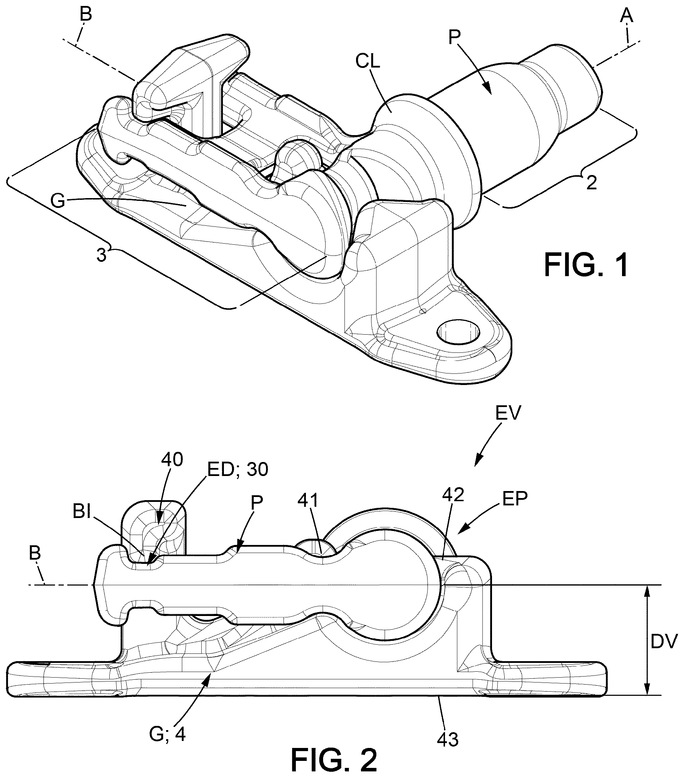

   [Fig. 1] est une vue en perspective d'un système pêne et gâche selon la présente divulgation, selon un premier mode de réalisation, dans l'état de verrouillage pour lequel le pêne est engagé et verrouillé dans la gâche, le pêne comportant une portion mâle s'étendant suivant un axe A, configurée pour être emboitée et fixée typiquement par soudure à une barre de commande et une portion d'engagement s'étendant suivant un axe B.
**Fig. 2**
   [Fig. 2] est une vue du système dans l'état de verrouillage selon la figure 1, vue selon l'axe A.
**Fig. 3**

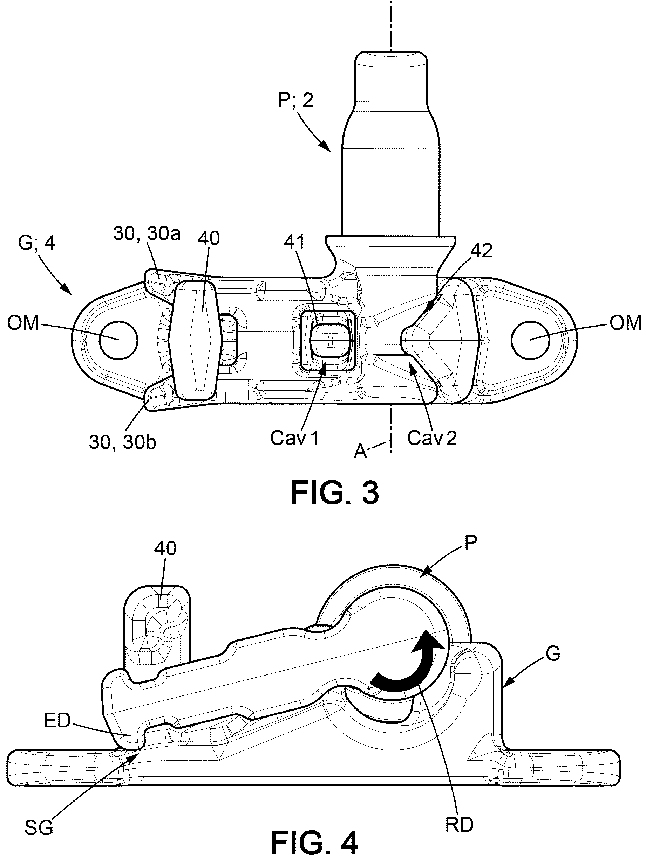

   [Fig. 3] est une vue du système dans l'état de verrouillage selon la figure 1, vue de face.
**Fig. 4**
   [Fig. 4] est une vue successive de la figure 2 lorsque le pêne initie un pivotement au déverrouillage, engendrant un décrochage de l'extrémité distale du pêne de l'organe d'accroche de la gâche, puis une mise en butée de l'extrémité distale contre une surface de guidage du pêne, à la base de l'organe d'accroche.
**Fig. 5**

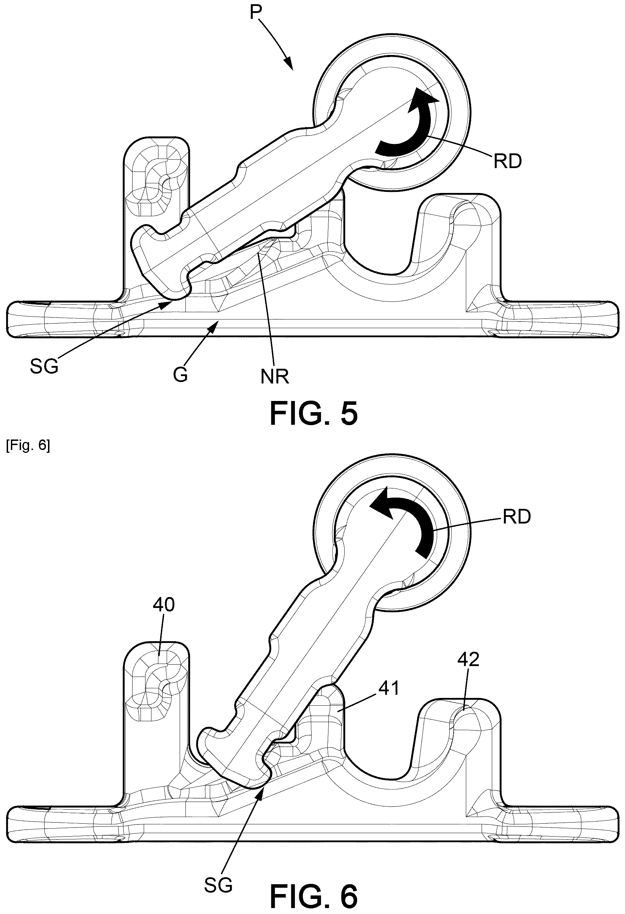

   [Fig. 5] est une vue successive de la figure 4 lors du pivotement au déverrouillage, l'extrémité distale du pêne en glissement sur la surface de guidage continuant la poussée et l'écartement de l'axe A.
**Fig. 6**
   [Fig. 6] est une vue successive de la figure 5 lors du pivotement au déverrouillage, l'extrémité distale du pêne en glissement sur une rampe montante de la surface de guidage continuant la poussée et l'écartement de l'axe A
**Fig. 7**

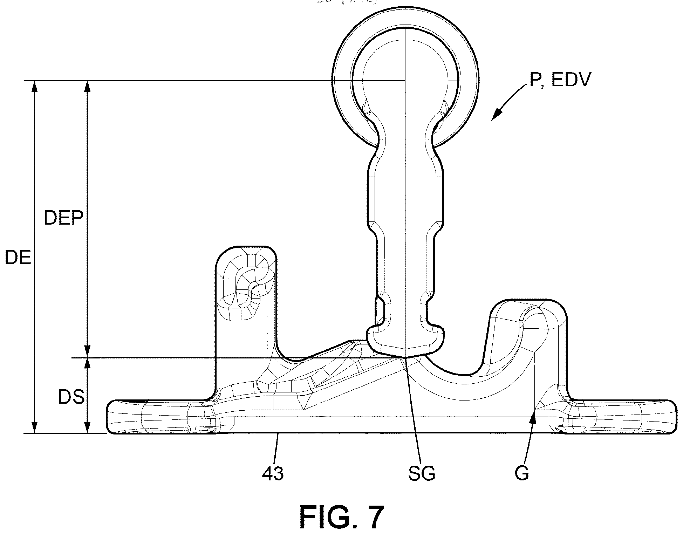

   [Fig. 7] est une vue successive de la figure 6 lors du pivotement au déverrouillage, l'extrémité distale du pêne en contact au sommet de la rampe montante de la surface de guidage illustrant la position d'extraction pour laquelle l'axe B du pêne est perpendiculaire à la surface de fixation de la gâche, à savoir la position pour laquelle l'axe A est le plus éloigné de la surface de fixation de la gâche au cours du pivotement au déverrouillage.
**Fig. 8**

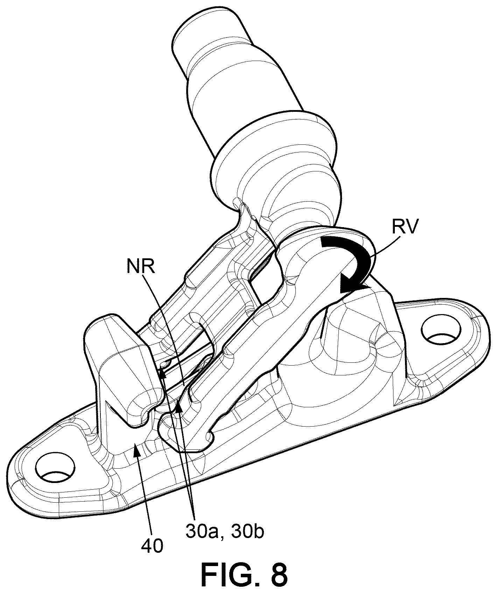

   [Fig. 8] est une vue du système pêne et gâche lors d'un pivotement au verrouillage du pêne, avant accrochage de l'extrémité distale du pêne avec l'organe d'accrochage en T de la gâche.
**Fig. 9**

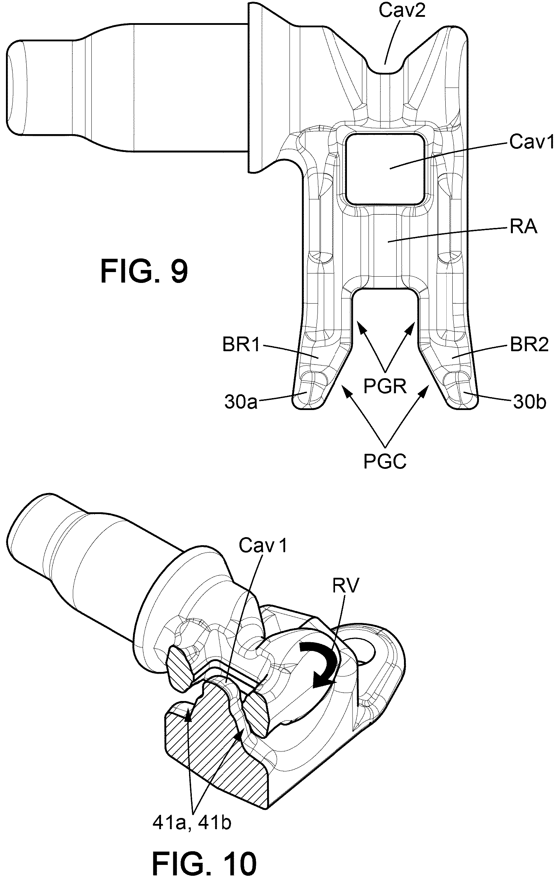

   [Fig. 9] est une vue de face du pêne illustrant en particulier l'extrémité distale du pêne, qui comporte une fourche, avec une première branche terminée par une première portion d'accroche et une deuxième branche terminée par une deuxième portion d'accroche, illustrant en particulier l'entrée de la fourche, comportant des surfaces de guidage opposées entre les deux branches de la fourche, convergentes en direction du sens d'insertion, à fonction de centrage, les surfaces de guidage convergentes, suivies respectivement par des surfaces de guidages, rectilignes, entre lesquelles l'aile verticale de la partie en T de l'organe d'accroche est logée, dans ledit état de verrouillage.
**Fig. 10**
   [Fig. 10] est une vue de coupe passant par la saillie qui est logée dans la première cavité, lors de la fermeture, la figure 10 étant successive à la figure 9, l'extrémité distale du pêne ayant accroché l'organe d'accroche de la gâche, la première saillie de la gâche présentant une première pente de guidage configurée pour assurer un (premier) centrage du pêne par rapport à la gâche suivant la direction de l'axe A suivant un premier sens, et une deuxième pente de guidage configurée pour assurer un (premier) centrage du pêne par rapport à la gâche suivant la direction de l'axe A suivant un deuxième sens, opposé au premier sens..
**Fig. 11**

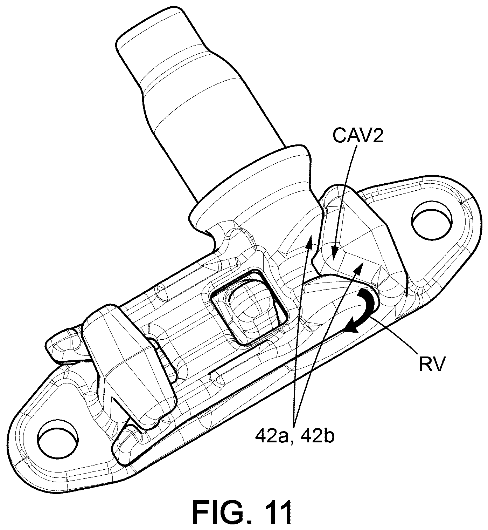

   [Fig. 11] est une vue successive à la figure 10, en afin de verrouillage au cours laquelle la deuxième saillie de guidage, triangulaire, et la deuxième cavité assurent un deuxième centrage, suivant un premier sens selon la direction de l'axe A par un premier couple de parois en regard appartenant respectivement à deuxième saillie triangulaire et à la cavité en V ou suivant un deuxième sens selon la direction de l'axe A par un deuxième couple de parois en regard appartenant respectivement à deuxième saillie triangulaire et à la cavité en V.
**Fig. 12**

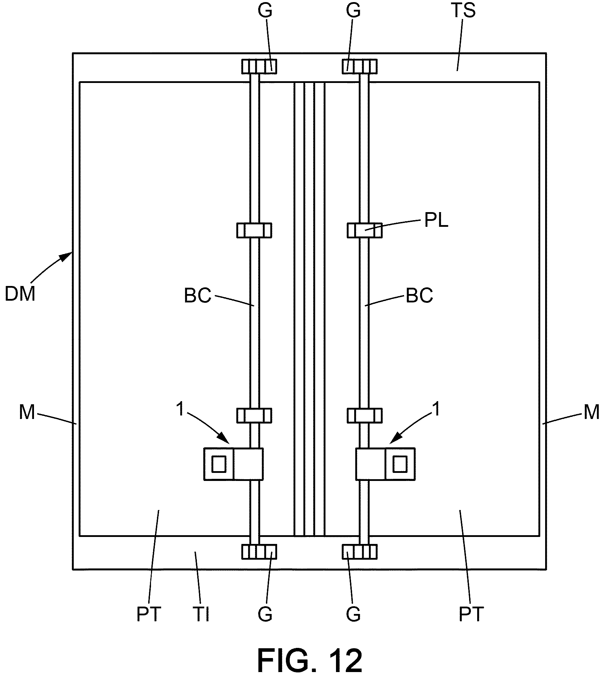

   [Fig. 12] est une vue schématique arrière d'une caisse de semi-remorque, qui comporte une ouverture de chargement fermée par deux portes battantes, droite et gauche, respectivement montées par des charnières (non illustrées) à deux montants du dormant de la porte, chacune des portes comportant un dispositif d'ouverture et de fermeture comprenant, pour chaque porte (droite ou gauche):
   - une barre de commande, montée pivotante sur la porte par des paliers, suivant un axe de pivot parallèle à l'axe vertical des charnières de porte, comportant une poignée de commande pour sa mise en rotation,
   - un système pêne et gâche, inférieur, comprenant une gâche montée sur la traverse inférieure du dormant, et un pêne monté solidaire en rotation de l'extrémité inférieure de la barre de commande, et,
   - un système pêne et gâche, supérieur, comprenant une gâche montée sur la traverse supérieure du dormant, et un pêne monté solidaire en rotation de l'extrémité supérieure de la barre de commande.
**Fig. 13**

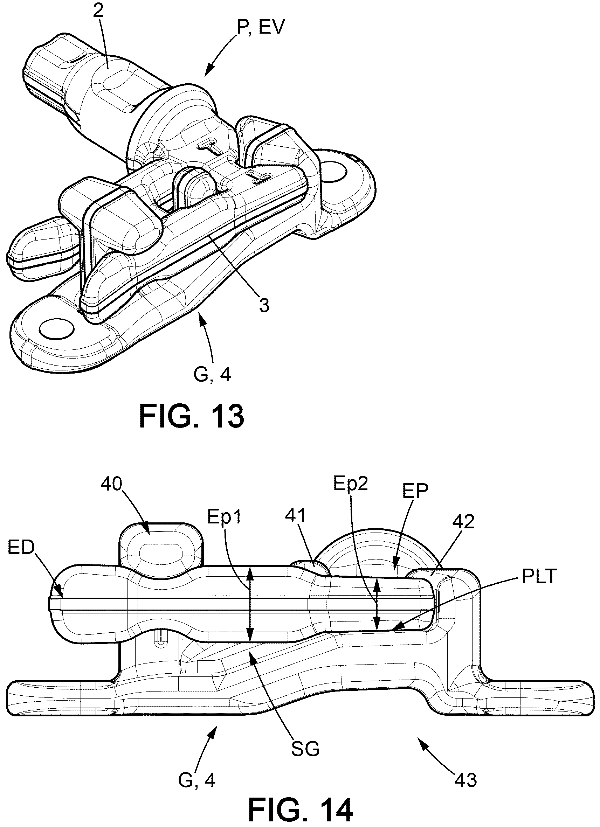

   [Fig. 13] est une vue en perspective d'un système pêne et gâche selon la présente divulgation, selon un deuxième mode de réalisation, dans l'état de verrouillage pour lequel le pêne est engagé et verrouillé dans la gâche, le pêne comportant une portion mâle s'étendant suivant un axe A, configurée pour être emboitée et fixée à une barre de commande et une portion d'engagement s'étendant suivant un axe B.
**Fig. 14**
   [Fig. 14] est une vue du système selon la figure 13 dans l'état de verrouillage, vue selon l'axe A.
**Fig. 15**

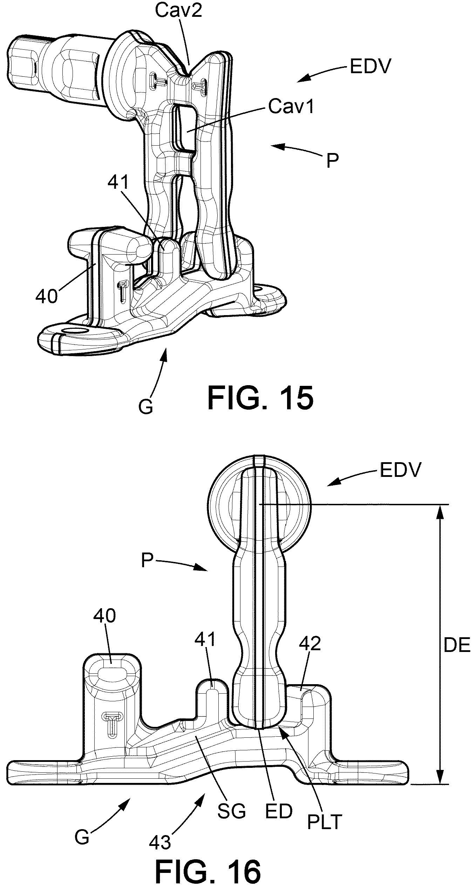

   [Fig. 15] est une vue en perspective du système selon la figure 13 dans l'état de déverrouillage
**Fig. 16**
   [Fig. 16] est une vue en perspective du système selon la figure 13 dans l'état de déverrouillage

### Description des modes de réalisation

La présente divulgation est relative à un système pêne et gâche pour dispositif d'ouverture et de fermeture 1 d'une porte de camion ou de semi-remorque, le système comprenant un pêne P et une gâche G, ladite porte PT étant configurée pour passer d'une position d'ouverture jusqu'à une position de fermeture, par articulation de la porte PT, typiquement selon un pivot vertical à un montant M d'un dormant DM, la gâche destinée à être fixée au dormant DM de la porte, typiquement à une traverse supérieure TS ou à une traverse inférieure TI du dormant de la porte, et le pêne destiné à être monté solidaire à une extrémité d'une barre de commande BC du dispositif d'ouverture et de fermeture, tubulaire. La barre de commande est montée pivotante sur la porte, typiquement par l'intermédiaire de paliers PL.

Le dispositif d'ouverture et de fermeture 1 est configuré pour passer d'un état de verrouillage EV pour lequel le pêne P (inférieur ou supérieur) vient en position d'engagement et de verrouillage dans la gâche jusqu'à un état de déverrouillage EDV, par pivotement de la barre de commande, autorisant un échappement entre le pêne et la gâche.

De manière générale, et qu'illustrée à la figure 12, la caisse de semi-remorque ou une caisse de camion comporte une ouverture arrière délimitée par un dormant d'ouvrant qui comporte une cadre comprenant deux montants M, verticaux, et deux traverses, y compris une traverse supérieure TS, et une traverse inférieur TI.

Deux portes, battantes, sont configurées pour fermer l'ouverture, la porte gauche, obturant la moitié gauche de l'ouverture, articulée par des charnières au montant gauche du cadre alors que la porte droite fermant la moitié droite de l'ouverture, articulée par des charnières au montant droit du cadre.

Chacune des portes est équipée du dispositif de fermeture et d'ouverture qui comporte la barre de commande BC, s'étendant suivant la hauteur de la porte, articulée à la surface extérieure de la porte par les paliers, et actionnable par un organe de manœuvre solidaire en rotation de la barre de commande, et typiquement rabattable dans une position de verrouillage contre la porte.

Les pênes inférieur et supérieur sont ainsi solidaires en rotation de la barre de commande, et sont configurés pour s'engager au verrouillage respectivement dans des gâches G, inférieure et supérieure, respectivement de la traverse supérieure TS et de la traverse inférieure TI du dormant.

Aussi et de manière générale, ledit dispositif d'ouverture et de fermeture 1 est configuré pour passer de l'état de verrouillage EV pour lequel le pêne P vient en position d'engagement et de verrouillage dans la gâche jusqu'à un état de déverrouillage EDV, par pivotement de la barre de commande, autorisant un échappement entre le pêne et la gâche.

De manière générale et tel qu'illustré à la figure 1, le (ou chaque) pêne P comprend :
- une partie mâle 2 configurée pour être emboitée dans le creux de la barre de commande BC, à une embouchure de la barre de commande, ladite partie mâle s'étendant suivant un axe A, destiné à être coaxial à la barre de commande,
- une partie d'engagement 3 configurée pour engager et se verrouiller en position dans ladite gâche, ladite partie d'engagement 3 s'étendant en longueur suivant un axe B, transversal à l'axe A, depuis une extrémité proximale EP solidaire de la partie mâle au niveau de laquelle est prévue au moins une cavité de verrouillage Cav 1, Cav 2 et jusqu'à une extrémité distale ED comportant au moins une portion d'accrochage 30.

La partie mâle 2 peut être sensiblement cylindrique, voire conique légèrement, pour être insérée en emboîtement à l'extrémité tubulaire de la barre de commande.

La partie mâle 2 peut être suivie d'une collerette CL formant une butée pour le chant de la barre de commande. La solidarisation entre la barre de commande et le pêne peut être assurée par une soudure, par exemple entre la collerette et la barre de commande, et/ou par le montage d'une bague venant enserrer la portion tubulaire de la barre de commande autour de la partie mâle 2.

La partie d'engagement 3 s'étend transversalement selon l'axe B qui est perpendiculaire à l'axe A depuis ladite extrémité proximale EP, proche de l'axe A, jusqu'à l'extrémité distale EP plus distante de l'axe A.

La partie d'engagement 3 et la partie mâle 2 peuvent former un L.

Le pêne P, y compris la partie mâle 2 et la partie d'engagement 3, peut être un composant métallique d'un seul tenant. Le pêne est de préférence forgé, et afin de renforcer sa solidité.

De manière générale, et telle notamment illustré aux figures, la gâche G comprend un corps 4 s'étendant en longueur comportant, d'un premier côté une surface de fixation 43, plane, configurée pour venir en appui sur le dormant de la porte, en particulier contre une surface verticale de la traverse supérieure TS ou de la traverse inférieure TI, et comportant, d'un deuxième côté, en relief, et décalés sur la longueur de la gâche :
- un organe d'accrochage 40, configuré pour être accroché par l'extrémité distale EP de la partie d'engagement 3 du pêne,
- au moins une saillie de verrouillage 41, 42 configurée pour pénétrer ladite au moins une cavité de verrouillage Cav 1, Cav2.

La gâche peut encore comporter des orifices de montage OM, en particulier aux deux extrémités longitudinales du corps, configurés pour le passage d'organes de fixation, tels que les boulons de fixation assurant la fixation de la gâche au dormant.

Le corps 4 de la gâche G, peut être un composant métallique d'un seul tenant. La gâche est de préférence forgée, et afin de renforcer sa solidité. Toutefois d'autres mode de fabrication sont possibles, par exemple :
- une fabrication par fonderie,
- une fabrication additive, telle que l'impression 3D, voire encore,
- une fabrication par enlèvement de matière, telle que l'usinage.

De manière générale :
- le pêne peut comporter un plan de symétrie passant par l'axe A de la partie mâle 2, et l'axe B, longitudinal à la partie d'engagement 3, et/ou
- la gâche peut comporter un plan de symétrie passant par l'axe longitudinal de ladite gâche.

Le plan de symétrie de pêne permet d'utiliser une seule référence de pêne qui peut servir indifféremment de pêne supérieur ou inférieur et quel que soit le sens d'ouverture de la porte (droite ou gauche).

Le plan de symétrie de la gâche permet d'utiliser une seule référence de gâche qui peut servir indifféremment de gâche supérieure ou inférieure, quel que soit le sens d'ouverture de la porte, droite ou gauche.

De manière générale, et comme illustré aux figures 8,9 et 11 ledit pêne P est configuré lors d'un pivotement au verrouillage RV autour de l'axe A, à partir de l'état de déverrouillage EDV pour successivement assurer un accrochage de l'organe d'accroche 40 de la gâche par ladite au moins une portion d'accroche 30, et consécutivement une traction sur la gâche jusqu'à ce que ladite au moins une saillie 41,42 de verrouillage vienne engager dans ladite au moins une cavité Cav1, Cav2 dans ledit état de verrouillage EV.

Dans l'état de verrouillage EV, en particulier illustré aux figures 1 et 2, la partie d'engagement du pêne P s'étend suivant l'axe B, sensiblement parallèlement à l'axe longitudinal de la gâche G ladite au moins une portion d'accrochage 30 du pêne accrochée audit organe d'accrochage 40 afin d'assurer un verrouillage du pêne par rapport à la gâche suivant l'axe B, ladite au moins une saillie de verrouillage 41, 42 engageant dans ladite au moins une cavité du pêne Cav1, Cav2 de sorte à assurer un verrouillage du pêne P par rapport à la gâche GT suivant l'axe A du pêne.

De manière générale, le système pêne et gâche est configuré lors d'un pivotement au déverrouillage RD du pêne autour de l'axe A jusqu'audit état de déverrouillage EDV comprenant successivement, au cours du pivotement au déverrouillage RD du pêne autour de l'axe A:
- un décrochage entre ladite au moins une partie d'accrochage 30 de l'extrémité distale du pêne et de l'organe d'accrochage 40 de la gâche,
- une mise en contact en l'extrémité distale ED du pêne et au moins une surface de guidage SG de la gâche s'étendant sur le corps 4 de la gâche, en longueur sur le corps gâche, depuis une base de l'organe d'accroche 30, et en direction des de ladite au moins une saillie de verrouillage 41, 42,
- une poussée du pêne P sur la gâche par l'extrémité distale du pêne en glissement sur la surface de guidage, et jusqu'à ce que l'axe B de la portion d'engagement 3 du pêne soit sensiblement perpendiculaire à la surface de fixation 43 dans une position d'extraction du pêne.

Selon la présente divulgation, la distance d'extraction DE séparant l'axe A et la surface de fixation 43 de la gâche dans ladite position d'extraction, en fin de poussée, est supérieure ou égale à 75mm, de préférence supérieure à 80 mm, par exemple compris entre 80 mm et 115 mm, telle que 87mm, en particulier selon la mode de la figure 7, ou encore 97mm selon le mode de réalisation de la figure 16.

La distance d'extraction DE supérieure ou égale à 75mm est supérieure à l'état connu de la Demanderesse, et assure un meilleur décollement de la porte. Cela permet en particulier à la porte extraite par l'action de poussée du pêne P sur la gâche G de dégager les joints d'étanchéité, totalement ou au moins en grande partie, facilitant grandement l'ouverture de porte comportant des joints d'étanchéité, en particulier des joints d'étanchéité large, par exemple supérieur à 80 mm suivant la direction en épaisseur de la porte, tel que par exemple 90mm.

Selon un mode de réalisation, et dans l'état de verrouillage EV pour lequel le pêne P est en engagement dans la gâche G, la distance de verrouillage séparant l'axe A et la surface de fixation 43 peut être comprise entre 20mm et 32mm, telle que 26.5mm.

De préférence, le système pêne et gâche est configuré, lors du pivotement au déverrouillage de la barre de commande, de l'état de verrouillage EV jusqu'à l'état de déverrouillage EDV dans la position d'extraction du pêne, pour écarter l'axe A du pêne par rapport à la surface de fixation 43 d'une course projetée suivant une direction perpendiculaire à la surface de fixation 43 supérieure à 45mm en particulier 50 mm, et en particulier de préférence une course projetée supérieure à 55 mm, telle que 60,5mm pour le premier mode de la figure 7, voire supérieure à 65mm, telle que 70,5 mm pour le deuxième mode de la figure 16. Une telle course de déplacement est compatible afin d'assurer un dégagement des joints et afin de diminuer sensiblement les frottements s'opposant à l'ouverture de la porte.

Selon un mode de réalisation, la surface de guidage GD le long de laquelle glisse l'extrémité distale EP de la portion d'engagement P du pêne, lors du pivotement au déverrouillage RD, peut former une rampe par rapport à la surface de fixation 43, croissante suivant le sens de l'organe d'accroche vers ladite au moins saillie 41, 42, l'extrémité distale ED configurée pour cheminer à la montée le long de la rampe lors du pivotement au déverrouillage RD, et tel qu'illustré des figures 5 à 7. Le profil ascendant de la rampe, qui est suivi par l'extrémité distale lors du pivotement au déverrouillage RD permet d'amplifier l'extraction.

Ainsi, ladite course de déplacement de l'axe A, de l'état de verrouillage jusqu'à l'état de déverrouillage, projetée suivant la direction perpendiculaire à l'axe A, est due pour partie en soi par la rotation du pêne, ainsi que par l'action de la rampe qui tend à écarter l'axe A lors de la rotation du pêne.

Selon un mode de réalisation, le sommet de la rampe de la surface de guidage SG au niveau de laquelle l'extrémité distale est susceptible d'appuyer à ladite position d'extraction, est à une distance DS de la surface de fixation 43 comprise entre 15 mm et 23 mm telle que 19 mm. La hauteur de la rampe suivant la direction perpendiculaire à la surface de fixation 43 peut être comprise entre 8.mm et 15 mm, telle que 12mm.

De manière générale, et comme visible à titre indicatif à la figure 3 figure 15, le sommet de la rampe peut former une saillie mâle reçue dans une partie femelle du pêne dans l'état de verrouillage EV.

De manière générale, la distance DEP séparant l'axe A de l'extrémité distale ED de la partie engagement du pêne est comprise entre 54.5 mm et 90 mm telle que 68 mm selon le premier mode de réalisation illustré, ou encore 78mm pour le deuxième mode de réalisation illustré.

De manière générale, on remarque que la distance d'extraction DE séparant l'axe A et la surface de fixation 43 est la somme de la distance DS séparant le sommet de la rampe de ladite surface d'extraction et de la distance DEP séparent l''axe A et de l'extrémité distale ED, et comme illustré à la figure 7.

Par exemple à titre d'exemple non limitatif, et en particulier selon le premier mode de réalisation des figures 1 à 11, les distances peuvent être :
- la distance DS est égale à 19 mm,
- la distance DEP est égale à 68mm,
- la distance d'extraction DE est égale à 87mm.

Par exemple à titre d'exemple non limitatif, et en particulier selon le deuxième mode de réalisation des figures 13 à 17, les distances peuvent être :
- la distance DS est égale à 19 mm,
- la distance DEP est égale à 78mm,
- la distance d'extraction DE est égale à 97mm.

Selon un mode de réalisation, dans ladite extrémité distale ED du pêne P comprend une fourche, et ledit au moins une portion d'accroche 30 comprend une première portion d'accroche 30a et une deuxième portion d'accroche 30b, espacées l'une de l'autre suivant l'axe A, respectivement agencées respectivement aux extrémités terminales d'une première branche et d'une deuxième branche de la fourche.

Ledit organe d'accroche 40 de la gâche est une partie en T comprenant une aile verticale de la partie en T, s'étendant suivant une direction perpendiculaire à un plan de surface de fixation 43 et une aile horizontale de la partie en T, ladite aile verticale en saillie du corps 4 de la gâche et ladite aile horizontale orientée suivant une direction transversale à l'axe longitudinal de la gâche.

Lors d'un passage de l'état de déverrouillage EDV à l'état de verrouillage EV, la première branche BR1 et la deuxième branche BR3 de la fourche sont configurées pour venir de part et d'autre de l'aile verticale de la partie en T, et comme illustré à titre indicatif à la figure 8, la première portion d'accroche 30a et la deuxième portion d'accroche 30b étant configurées pour accrocher simultanément une bordure inférieure BI de l'aile horizontale de la partie en T, de part et d'autre de l'aile verticale de la partie en T.

De manière générale, et comme illustré à la figure 9 ; la fourche peut présenter à partir des extrémités terminales des branches BR1, BR2, des parois de guidage convergentes PGC assurant un centrage du pêne par rapport à la gâche suivant la direction de l'axe A, par coopération avec l'aile verticale de l'organe d'accroche 30 lorsque les deux branches BR1 et BR2 sont insérées de part et d'autre aile verticale. Les parois de guidage convergentes PGC des deux branches BR1, BR2 peuvent se prolonger en direction de l'axe A du pêne par des parois de guidage rectilignes PGR, parallèles en elles, assurant un guidage de ladite aile verticale de l'organe d'accroche 30 dans l'état de verrouillage EV.

La surface de guidage SG peut alors comprendre une première surface de guidage, et une deuxième surface de guidage s'étendant en parallèle suivant la longueur du corps de la gâche, de part et d'autre de ladite aile verticale de la partie en T:
- la première surface de guidage est configurée pour coopérer au glissement avec l'extrémité terminale de la première branche BR1 de la fourche, et
- la deuxième surface de guidage est configurée pour coopérer au glissement avec l'extrémité terminale de la deuxième branche BR2 de la fourche.

La première surface de guidage et la deuxième surface guidage s'étendent en parallèle sur la longueur de la gâche pour former ladite rampe.

Selon un mode de réalisation, ladite au moins une cavité Cav 1, Cav 2 comprend une cavité traversante Cav 1, de préférence de contour fermée, agencée intermédiaire sur la portion d'engagement, entre l'axe A et ladite au moins une portion d'accroche 30 suivant l'axe B.

La gâche comprend une saillie 41 de verrouillage configurée pour engager la cavité traversante dans l'état de verrouillage EV,
ladite saillie 41 présentant, en particulier telle qu'illustrée à la figure 10 :
- une première pente de guidage 41a, configurée pour engager avec un premier bord latéral de la cavité traversante Cav1 pour repousser le pêne par rapport à la gâche dans un premier sens suivant la direction de l'axe A,
- une deuxième pente de guidage 41b, diamétralement opposé par rapport à l'axe longitudinal de la gâche, configurée pour engager avec un deuxième bord latéral de la cavité traversante Cav1 pour repousser le pêne par rapport à la gâche dans un premier sens suivant la direction de l'axe A.

On remarque que ladite cavité intermédiaire Cav1 est agencée, suivant l'axe B de la portion d'engagement 3 à distance de la fourche, séparée par une portion médiane du pêne ;

Selon un mode de réalisation, et notamment comme illustré aux figures 8 et 9, le système peut comprendre une nervure de renfort NR s'étendant suivant la direction de l'axe longitudinal de la gâche entre la base de l'aile verticale du T de l'organe d'accroche 30 et une base de ladite saillie 41. La portion d'engagement 3 du pêne (en particulier, sa portion médiane entre ladite fourche et ladite cavité traversante cav1) peut comprendre une rainure RA s'étendant l'axe B, logeant la nervure de renfort NR dans l'état de verrouillage EV.

Selon un mode de réalisation, ladite au moins une cavité Cav 1, Cav2 peut comprendre une cavité d'extrémité de profil en V, débouchant à l'extrémité proximale, du côté de l'axe A opposé à l'extrémité distale ED de la portion d'engagement 3 du pêne.

La gâche comprend alors une saillie triangulaire 42 comprenant deux surfaces de butée en V, qui consistent en première surface de butée 42a et une deuxième surface de butée 42b, inclinées l'une par rapport à l'autre de part et d'autre de l'axe longitudinal de la gâche et configurées coopérer respectivement avec les deux parois correspondantes de la cavité Cav 2 en V.

Selon un mode de réalisation, ledit système peut comprendre :
- ladite cavité traversante agencée intermédiaire sur la portion d'engagement, entre l'axe A et ladite au moins une portion d'accroche 30 formant une première cavité Cav1, configurée pour engager avec la saillie 41 qui est une première saillie
- ladite cavité d'extrémité débouchant à l'extrémité proximale, du côté de l'axe A opposé à l'extrémité distale ED de la portion d'engagement 3d u pêne formant une deuxième cavité Cav2 configurée pour engager avec la saillie triangulaire 42 qui est une deuxième saillie.

Dans l'état de verrouillage EV, le pêne P est verrouillé par rapport à la gâche, par la première saillie 41 logée dans la première cavité Cav1 et par la deuxième saillie 42 logée dans la deuxième cavité Cav2, de part et d'autre de l'axe A.

Selon un mode de réalisation avantageux, la première saillie 41 et la deuxième saillie 42 sont configurées, lors d'un pivotement au verrouillage RV du pêne autour de l'axe A, de l'état de déverrouillage EDV jusqu'à l'état de verrouillage EV, pour assurer :
- un premier centrage du pêne P par rapport à la gâche G suivant la direction de l'axe A par un travail de la première pente de guidage 41a sur le premier bord latéral de la cavité traversante Cav1 et/ou de la deuxième pente de guidage 42b sur le deuxième bord latéral de la cavité traversante Cv2 puis successivement
- un deuxième centrage du pêne P par rapport à la gâche G suivant la direction de l'axe A par un travail d'une première des deux parois en V de la saillie triangulaire 42 sur l'une des deux parois en V de la deuxième cavitéV2 et/ou le travail d'une deuxième des deux parois en V de la saillie triangulaire sur l'autre des deux parois en V de la deuxième cavité V2 .

Selon le premier mode de réalisation, ladite extrémité proximale EP de portion d'engagement peut comporter une portion cylindrique coaxiale à l'axe A. Dans l'état de verrouillage EV, la gâche comprend alors une cavité semi-cylindrique, recevant partiellement la portion cylindrique, en particulier la cavité semi-cylindrique agencée entre la première saillie 41 et la deuxième saillie 42, et comme visible à la figure 2. Si cette caractéristique améliore le verrouillage, la cavité semi-cylindrique peut une gêne lors des opérations de verrouillage.

Ainsi, et lorsque l'opérateur ferme la perte, il existe alors une possibilité que l'extrémité distale ED du pêne vienne, engager, non pas contre la surface de guidage SG, mais se loger dans la cavité cylindrique. Dans un tel cas, l'extrémité distale du pêne est piégée dans la cavité cylindrique, interdisant la rotation au verrouillage RV du pêne, si jamais l'opérateur ne recule pas préalable la porte. Le deuxième mode de réalisation des figures 13 à 17 vient améliorer cette situation.

Selon ce deuxième mode de réalisation, la rampe de la surface de guidage, croissante suivant le sens de l'organe d'accrochage par rapport à la surface de fixation vers ladite au moins saillie s'étend jusqu' à un sommet formé par un plateau PLT. Ce plateau s'étant sensiblement parallèle à la surface de fixation 43 de ladite gâche, plateau sur lequel butée l'extrémité distale ED de la partie d'engagement 3 dans ledit état de déverrouillage EDV. On entend comme sensiblement parallèle le fait que le plateau est parallèle à la surface de fixation 43, voire très légèrement incliné d'un angle inférieur à 5°, telle que 2°, et de préférence dans le même sens que la pente de la rampe.

Ainsi, et lorsque l'opérateur ferme la perte, l'extrémité distale ED du pêne vient, engager, non soit du la surface de guidage SG, soit sur le plateau PLT. Lorsque l'extrémité distale engage avec le plateau PLT. Dans ce dernier cas, une rotation au verrouillage RV engendre le glissement de l'extrémité distale, sur le plateau, puis à la descente de la rampe pour assurer l'accrochage de l'organe d'accroche et jusqu'à l'état de déverrouillage, et sans avoir à reculer la porte.

De manière générale, le plateau PLT peut s'étendre suivant la longueur de la gâche entre la première saillie 41 et la deuxième saillie 42.

Ladite extrémité proximale EP de ladite partie d'engagement 3 du pêne P peut comprendre une partie effilée d'épaisseur Ep2, inférieure à l'épaisseur Ep1 d'une portion médiane de la partie d'engagement 3 entre ladite extrémité distale EP et ladite extrémité proximale ED. La partie effilée configuré pour venir en vis-à-vis du plateau PLT dans l'état de verrouillage EV, et comme illustré à la figure 15. En particulier on remarque que la partie effilée peut comprendre au moins un plat qui peut être configuré pour venir en butée contre le plateau PLT dans l'état de verrouillage EV.

On remarque encore que du côté de la surface de fixation 43 de la gâche peut être évidée, sur une position médiane en deux portions d'extrémités, et afin de limiter la quantité de matière utilisée. Un tel évidemment est visible à titre d'exemple sur le deuxième mode de réalisation.

La présente divulgation est encore relative à un dispositif d'ouverture et de fermeture 1 de porte de camion ou semi-remorque, comprenant au moins une porte PT articulée en pivot à un montant M d'un dormant DM d'une caisse du camion ou de la semi-remorque. Le dispositif 1 comprend une barre de commande B articulée en pivot par des paliers PL à ladite porte, ainsi qu'au moins un système pêne et gage selon la présente divulgation dont le pêne P est fixé à une extrémité de la barre de commande BC, et la gâche G fixée par la surface de fixation 43 à une traverse, supérieure ou inférieure du dormant de la porte.

Le système pêne et gâche est configuré lors d'un pivotement au déverrouillage RD du pêne autour de l'axe A depuis l'état de verrouillage jusqu'audit état de déverrouillage EDV pour provoquer, successivement , au cours du pivotement au déverrouillage RD du pêne autour de l'axe A:
- un décrochage entre ladite au moins une partie d'accrochage 30 de l'extrémité distale du pêne et de l'organe d'accrochage 40 de la gâche,
- une mise en contact en l'extrémité distale ED du pêne et au moins une surface de guidage SG de la gâche s'étendant sur le corps 4 de la gâche, en longueur sur le corps gâche, depuis une base de l'organe d'accroche 40, et en direction de ladite au moins une saillie de verrouillage 41, 42,
- une poussée du pêne P sur la gâche par l'extrémité distale du pêne en glissement sur la surface de guidage, et jusqu'à ce que l'axe B de la portion d'engagement 3 du pêne soit sensiblement perpendiculaire à la surface de fixation 43 dans une position d'extraction.

La distance d'extraction DE séparant l'axe A et la surface de fixation 43 de la gâche dans ladite position d'extraction est supérieure ou également à 75mm, de préférence supérieure à 80 mm par exemple compris entre 80mm et 110mm telle que 87mm ou 97mm, et de préférence suivant une course de l'axe A, et de préférence selon un déplacement de l'axe A d'une course projetée suivant une direction perpendiculaire à la surface de fixation 43 supérieure à 50 mm de préférence supérieure à 55 mm, telle que 60,5mm entre l'état de verrouillage EV et l'état de déverrouillage EDV, voire supérieure 65mm tel que 70,5mm.

### Application industrielle

La présente divulgation concerne encore l'utilisation du dispositif d'ouverture et de fermeture selon la présente divulgation pour une porte de caisse de semi-remorque frigorifique ou de camion frigorifique comprenant des joints d'étanchéité entre le dormant et la porte, ladite position d'extraction du pêne configurée pour assurer un déplacement de la porte à l'ouverture au niveau de l'axe A, autorisant un échappement des joints d'étanchéité en totalité au moins partiellement.

### Liste des signes de référence

- 1: Dispositif d'ouverture et de fermeture,
- P. Pêne,
- 2. Partie mâle,
- A. Axe de la partie mâle
- 3. Partie d'engagement,
- B. Axe de la partie d'engagement
- EP. Extrémité proximale,
- ED. Extrémité distale,
- 30. Portion d'accroche,
- 30a, 30b. Première et deuxième portion d'accroche
- Cav 1, Cav 2. Cavités (verrouillage)
- G. Gâche,
- 4 Corps (gâche)
- 40. Organe d'accroche (destiné à être accroché par la partie d'accroche du pêne)
- 41, 42 Saillies de verrouillage (destinée à pénétrer les cavités de verrouillage du pêne,
- 41a, 41b première pente de guidage et deuxième pente de guidage
- 43. Surface de fixation,
- BC. Barre de commande,
- PL. Paliers
- PT. Porte,
- DM. Dormant,
- M. Montant,
- TS. Traverse supérieure,
- TI. Traverse inférieure,
- RD. Pivotement au déverrouillage (figure 4),
- DE. Distance d'extraction (séparant l'axe A de la surface de fixation 43),
- DS. Distance séparant le sommet de la rampe de la surface de fixation 43
- DEP. Distance séparant l'extrémité distale du pêne de l'axe A,
- BR1, BR2. Première branche et deuxième branche (fourche),
- PGC. Parois de guidage convergentes,
- PGR. Parois de guidage rectilignes
- EV. Etat de verrouillage,
- EDV. Etat de déverrouillage.

## Revendications

1. Système pêne et gâche pour dispositif d'ouverture et de fermeture (1) d'une porte de caisse de camion ou de semi-remorque, le système comprenant un pêne (P) et une gâche (G), ladite porte (PT) étant configurée pour passer d'une position d'ouverture jusqu'à une position de fermeture, par articulation de la porte (PT), typiquement selon un pivot vertical à un montant (M) d'un dormant, la gâche destinée à être fixée au dormant (DM) de la porte, typiquement à une traverse supérieure (TS) ou à une traverse inférieure (TI) du dormant de la porte, et le pêne (P) destiné à être monté solidaire à une extrémité d'une barre de commande (BC), du dispositif d'ouverture et de fermeture, ladite barre de commande étant tubulaire, montée pivotante sur la porte, par l'intermédiaire de paliers (PL), ledit dispositif d'ouverture et de fermeture (1) configuré pour passer d'un état de verrouillage (EV) pour lequel le pêne (P) vient en position d'engagement et de verrouillage dans la gâche (G) jusqu'à un état de déverrouillage (EDV), par pivotement de la barre de commande, autorisant un échappement entre le pêne et la gâche
- le pêne (P) comprenant :
-- une partie mâle (2) configurée pour être emboitée dans un creux de la barre de commande (BC), à une embouchure de la barre de commande, ladite partie mâle s'étendant suivant un axe A, destiné à être coaxial à la barre de commande,
-- une partie d'engagement (3) configurée pour engager et se verrouiller en position dans ladite gâche s'étendant en longueur suivant un axe B, transversal à l'axe A, depuis une extrémité proximale (EP) solidaire de la partie mâle au niveau de laquelle est prévue au moins une cavité de verrouillage (Cav 1, Cav 2) et jusqu'à une extrémité distale (ED) comprenant une fourche et au moins une portion d'accrochage (30) présentant une première portion d'accroche (30a) et une deuxième portion d'accroche (30b), espacées l'une de l'autre suivant l'axe A, respectivement agencées respectivement aux extrémités terminales d'une première branche et d'un deuxième branche de la fourche,
- la gâche (G) comprenant un corps (4) s'étendant en longueur comportant, d'un premier côté une surface de fixation (43), plane, configurée pour venir en appui sur le dormant de la porte, et comportant d'un deuxième côté en relief, décalés sur la longueur de la gâche :
-- un organe d'accrochage (40), configuré pour être accroché par l'extrémité distale (ED) de la partie d'engagement du pêne, ledit organe d'accrochage étant une partie en T comprenant une aile verticale de la partie en T, s'étendant suivant un direction perpendiculaire à un plan de la surface de fixation (43) et une aile horizontale de la partie en T, ladite aile verticale en saillie du corps (4) de la gâche et ladite aile horizontale orientée suivant une direction transversale à l'axe longitudinale de la gâche,
-- au moins une saillie de verrouillage (41, 42) configurée pour pénétrer ladite au moins une cavité de verrouillage (Cav 1, Cav2),
ledit pêne étant configuré lors d'un pivotement au verrouillage autour de l'axe A, à partir de l'état de déverrouillage (EDV) pour successivement assurer un accrochage de l'organe d'accroche (30) par ladite au moins une portion d'accroche (40) puis une traction sur la gâche jusqu'à ladite au moins une saillie de verrouillage (41, 42) vienne engager dans ladite au moins une cavité (Cav1, Cav2) dans ledit état de verrouillage (EV), au cours duquel lors du passage de l'état de déverrouillage (EDV) à l'état de verrouillage (EV), la première branche (BR1) et la deuxième branche (BR2) de la fourche sont configurées pour venir de part et d'autre de l'aile verticale de la partie en T, la première portion d'accroche (30a) et le deuxième portion d'accroche (30b) configurées pour accrocher une bordure intérieure de l'aile horizontale de la partie en T, de part et d'autre de l'aile verticale de la partie en T,
et dans lequel dans l'état de verrouillage (EV), la partie d'engagement du pêne (P) s'étend suivant l'axe B, sensiblement parallèlement à l'axe longitudinal de la gâche (G), ladite au moins une partie d'accrochage (30) du pêne accrochée audit organe d'accrochage (40) afin d'assurer un verrouillage du pêne par rapport à la gâche suivant l'axe B, ladite au moins une saillie de verrouillage (41, 42) engageant dans ladite au moins une cavité du pêne (Cav1, Cav2) de sorte à assurer un verrouillage du pêne par rapport à la gâche suivant l'axe A du pêne
et dans lequel le système pêne et gâche est configuré lors d'un pivotement au déverrouillage (RD) du pêne autour de l'axe A depuis l'état de verrouillage (EV) jusqu'audit état de déverrouillage (EDV) pour provoquer successivement , au cours du pivotement au déverrouillage (RD) du pêne autour de l'axe A:
- un décrochage entre ladite au moins une portion d'accrochage (40) de l'extrémité distale du pêne et de l'organe d'accrochage (30) de la gâche,
- une mise en contact en l'extrémité distale (ED) du pêne et au moins une surface de guidage (SG) de la gâche s'étendant sur le corps (4) de la gâche, en longueur sur le corps gâche, depuis une base de l'organe d'accroche (30), et en direction de ladite au moins une saillie de verrouillage (41, 42),
- une poussée du pêne (P) sur la gâche par l'extrémité distale (ED) du pêne en glissement sur la surface de guidage (SG), et jusqu'à ce que l'axe B de la portion d'engagement (3) du pêne soit sensiblement perpendiculaire à la surface de fixation (43) dans une position d'extraction du pêne.
et dans lequel la distance d'extraction (DE) séparant l'axe A et la surface de fixation (43) de la gâche dans ladite position d'extraction, en fin de poussée, est supérieure ou égale à 75mm, de préférence supérieure à 80 mm, par exemple compris entre 80mm et 110mm, telle que 87 mm ou 97mm.

2. Système pêne et gâche selon la revendication 1 dans lequel dans l'état de verrouillage (EV) pour lequel le pêne (P) est en engagement dans la gâche (G), la distance de verrouillage séparant l'axe A et la surface de fixation (43) est comprise entre 20mm et 32mm, telle que 26.5mm.

3. Système pêne et gâche selon la revendication 1 ou 2, configuré, lors du pivotement au déverrouillage (RD) de la barre de commande, de l'état de verrouillage (EV) jusqu'à l'état de déverrouillage (EDV) dans la position d'extraction du pêne, pour écarter l'axe A du pêne par rapport à la surface de fixation (43) d'une course projetée suivant une direction perpendiculaire à la surface de fixation (43) supérieure à 50 mm, de préférence supérieurs à 55 mm, telle que 60,5mm, voire supérieure à 65mm ou 70,5mm.

4. Système pêne et gâche selon l'une des revendications 1 à 3, dans lequel la surface de guidage (GD) le long de laquelle glisse l'extrémité distale (EP) de la portion d'engagement (3) du pêne lors du pivotement eu déverrouillage (RD) forme une rampe par rapport à la surface de fixation (43), croissante suivant le sens de l'organe d'accrochage (40) vers ladite au moins saillie (41, 42), et dans lequel l'extrémité distale (ED) est configurée pour cheminer à la montée le long de la rampe lors du pivotement au déverrouillage (RD).

5. Système pêne et gâche selon la revendication 4, dans lequel un sommet de la rampe de la surface de guidage (SG) au niveau de laquelle l'extrémité distale est susceptible d'appuyer à ladite position d'extraction est à une distance (DS) de la surface de fixation (43) comprise entre15 mm et 23 mm telle que 19mm, et dans lequel la hauteur de la rampe suivant la direction perpendiculaire à la surface de fixation (43) est comprise entre 6.mm et 15 mm

6. Système pêne et gâche selon la revendication 5 dans lequel le sommet de la rampe forme une saillie mâle reçue dans une partie femelle du pêne dans l'état de verrouillage (EV),

7. Système pêne et gâche selon l'une des revendications 1 à 6, dans lequel la distance (DEP) séparant l'axe A de l'extrémité distale (ED) de la partie engagement du pêne est comprise entre 54.5 mm et 90 mm telle que 68 mm ou encore 78 mm.

8. Système pêne et gâche selon la revendication 6 ou 7, dans lequel la surface de guidage (SG) comprend une première surface de guidage, et une deuxième surface de guidage s'étendant en parallèle suivant la longueur du corps de la gâche, de part et d'autre de ladite aile verticale de la partie en T, et dans lequel
- la première surface de guidage est configurée pour coopérer au glissement avec l'extrémité terminale de la première branche (BR1) de la fourche, et
- la deuxième surface de guidage est configurée pour coopérer au glissement avec l'extrémité terminale de la deuxième branche (BR2) de la fourche.

9. Système pêne et gâche selon l'une des revendications 1 à 8 dans lequel ladite au moins une cavité (Cav 1, Cav 2) comprend une cavité traversante (Cav 1) de contour fermée, agencée intermédiaire sur la portion d'engagement, entre l'axe A et ladite au moins une portion d'accroche (30), et dans lequel la gâche comprend une saillie (41) configurée pour engager la cavité traversante dans l'état de verrouillage (EV),
ladite saillie (41) présentant :
- une première pente de guidage (41a), configurée pour engager avec un premier bord latéral de la cavité traversante (Cav1) pour repousser le pêne par rapport à la gâche dans un premier sens suivant la direction de l'axe A,
- une deuxième pente de guidage (41b), diamétralement opposé par rapport à l'axe longitudinal de la gâche, configurée pour engager avec un deuxième bord latéral de la cavité traversante (Cav1) pour repousser le pêne par rapport à la gâche dans un premier sens suivant la direction de l'axe A.

10. Système selon la revendication 8 et 9 comprenant une nervure de renfort (NR) s'étendant suivant la direction de l'axe longitudinal de la gâche entre la base de l'aile verticale du T et une base de ladite saillie (41) et dans lequel la portion d'engagement du pêne comprend une rainure (RA), s'étendant suivant l'axe B de la portion d'engagement 3, logeant la nervure de renfort (NR) dans l'état de verrouillage (EV).

11. Système pêne et gâche selon l'une des revendications 1 à 10, dans lequel ladite au moins une cavité (Cav 1, Cav2) comprend une cavité d'extrémité de profil en V, débouchant à l'extrémité proximale, du côté de l'axe A opposé à l'extrémité distale (ED) de la portion d'engagement (3) du pêne et dans lequel la gâche comprend une saillie triangulaire (42) comprenant deux surfaces de butée en V consistant en une première surface de butée (42a) et une deuxième surface de butée (42b) configurées pour coopérer avec les deux parois de la cavité (Cav 2) en V.

12. Système pêne et gâche selon les revendications 9 ou 10 et 11 comprenant :
- ladite cavité traversante agencée intermédiaire sur la portion d'engagement, entre l'axe A et ladite au moins une portion d'accroche (30) formant une première cavité (Cav1), configurée pour engager avec la saillie (41) qui est une première saillie
- ladite cavité d'extrémité débouchant à l'extrémité proximale, du côté de l'axe A opposé à l'extrémité distale (ED) de la portion d'engagement (3) du pêne formant une deuxième cavité (Cav2) configurée pour engager avec la saillie triangulaire (42) qui est une deuxième saillie et dans lequel dans l'état de verrouillage (EV), le pêne (P) est verrouillé par rapport à la gâche, de par la première saillie (41) dans la première cavité (Cav1) et par la deuxième saillie (42) dans la deuxième cavité (Cav2), de part et d'autre de l'axe A.

13. Système pêne et gâche selon la revendication 12 dans lequel la première saillie (41) et la deuxième saillie (42) sont configurées, lors d'un pivotement au verrouillage (RV) du pêne autour de l'axe A, de l'état de déverrouillage (EDV) jusqu'à l'état de verrouillage (EV), pour assurer :
- un premier centrage du pêne (P) par rapport à la gâche (G) suivant la direction de l'axe A par un travail de la première pente de guidage (41a) sur le premier bord latéral de la cavité traversante (Cav1) et/ou de la deuxième pente de guidage (42b) sur le deuxième bord latéral de la cavité traversante (Cv2), puis successivement
- un deuxième centrage du pêne (P) par rapport à la gâche(G) suivant la direction de l'axe A par un travail d'une première des deux parois en V de la saillie triangulaire (42) sur l'une des deux parois en V de la deuxième cavité (V2) et/ou le travail d'une deuxième des deux parois en V de la saillie triangulaire sur l'autre des deux parois en V de la deuxième cavité (V2).

14. Système pêne et gâche selon la revendication 12 ou 13, dans lequel ladite extrémité proximale (EP) de portion d'engagement comporte une portion cylindrique coaxiale à l'axe A, et dans lequel dans l'état de verrouillage (EV), la gâche comprend une cavité semi-cylindrique, recevant partiellement la portion cylindrique, en particulier la cavité semi-cylindrique agencée entre la première saillie (41) et la deuxième saillie (42).

15. Système pêne et gâche selon la revendication 4 ou 5 dans lequel la rampe de la surface de guidage (GD), croissante suivant le sens de l'organe d'accrochage (40), par rapport à la surface de fixation (43), vers ladite au moins saillie (41, 42) s'étend jusqu' à un sommet formé par un plateau (PLT), s'sensiblement parallèle à la surface de fixation (43) de ladite gâche, plateau sur lequel butée l'extrémité distale (ED) de la partie d'engagement (3) dans ledit état de déverrouillage (EDV).

16. Système selon la revendication 12 ou 13 en combinaison avec la revendication 15 dans lequel le plateau (PLT) s'étend suivant la longueur de la gâche entre la première saillie (41) et la deuxième saillie (42).

17. Système selon la revendication 15 ou 16 dans lequel ladite extrémité proximale (EP) de ladite partie d'engagement (3) du pêne (P) comprend une partie effilée d'épaisseur Ep2, inférieure à l'épaisseur Ep1 d'une portion médiane de la partie d'engagement (3) entre ladite extrémité distale (EP) et ladite extrémité proximale (ED), la partie effilée configuré pour venir en vis-à-vis du plateau (PLT) dans l'état de verrouillage (EV).

18. Système pêne et gâche selon l'une des revendications 1 à 17 dans lequel le pêne et la gâche sont des pièces métalliques forgées.

19. Système pêne et gâche selon l'une des revendications 1 à 18 dans lequel :
- le pêne comporte un plan de symétrie passant par l'axe A de partie mâle (2), et par l'axe B, longitudinal de la partie d'engagement (3),
- la gâche comporte un plan de symétrie passant par l'axe longitudinal de ladite gâche

20. Dispositif d'ouverture et de fermeture (1) de porte de camion ou semi-remorque, comprenant au moins une porte (PT) articulée en pivot à un montant (M) d'un dormant (DM), le dispositif (1) comprenant une barre de commande (BC) articulée en pivot par des paliers (PL) à la porte, ainsi qu'au moins un système pêne et gage selon l'une des revendications 1 à 19 dont le pêne (P) est fixé à une extrémité de la barre de commande (BC), et la gâche (G) fixée par la surface de fixation (43) à une traverse, supérieure ou inférieure du dormant de la porte
et dans lequel le système pêne et gâche est configuré lors d'un pivotement au déverrouillage (RD) du pêne autour de l'axe A depuis l'état de verrouillage (EV) jusqu'audit état de déverrouillage (EDV) pour provoquer successivement , au cours du pivotement au déverrouillage (RD) du pêne autour de l'axe A:
- un décrochage entre ladite au moins une portion d'accrochage (30) de l'extrémité distale du pêne et de l'organe d'accrochage (40) de la gâche,
- une mise en contact entre l'extrémité distale (ED) du pêne et au moins une surface de guidage (SG) de la gâche s'étendant sur le corps (4) de la gâche, en longueur sur le corps gâche, depuis une base de l'organe d'accroche (30), et en direction de ladite au moins une saillie de verrouillage (41, 42),
- une poussée du pêne (P) sur la gâche par l'extrémité distale (ED) du pêne en glissement sur la surface de guidage (SG), et jusqu'à ce que l'axe B de la portion d'engagement (3) du pêne soit sensiblement perpendiculaire à la surface de fixation (43) dans une position d'extraction, et dans lequel la distance d'extraction (DE) séparant l'axe A et la surface de fixation (43) de la gâche dans ladite position d'extraction, en fin de poussée, est supérieure ou également à 75mm, de préférence supérieure à 80 mm par exemple compris entre 80mm et 110mm telle que 87mm ou 97mm, et de préférence selon un déplacement de l'axe A d'une course projetée suivant une direction perpendiculaire à la surface de fixation (43) supérieure à 50 mm de préférence supérieure à 55 mm, telle que 60,5mm, voire supérieure à 65mm telle que 70,5mm.

21. Utilisation du dispositif d'ouverture et de fermeture selon la revendication 20 pour une porte de semi-remorque frigorifique ou de camion frigorifique comprenant des joints d'étanchéité entre le dormant et la porte, ladite position d'extraction du pêne configurée pour assurer un déplacement de la porte à l'ouverture au niveau de l'axe A, autorisant un échappement des joints d'étanchéité.
